# EUROPÄISCHE PATENTSCHRIFT

(11) **EP 1 588 987 B1**
(45) Veröffentlichungstag und Bekanntmachung des Hinweises auf die Patenterteilung: **20.08.2008**
(21) Anmeldenummer: 05450068.1
(22) Anmeldetag: 14.04.2005
(51) Int. Cl.: C02F 3/12

(54) **Kläranlage mit konzentrisch angeordneten Becken**
Water treatment plant having concentric basins
Station d'épuration avec des bassins arrangés d'une manière concentrique

(30) Priorität: 14.04.2004 AT 6412004
(43) Veröffentlichungstag der Anmeldung: 26.10.2005
(73) Patentinhaber: Wadl, Siegfried, 9462 Bad St. Leonhard (AT)
(72) Erfinder: Wadl, Siegfried, 9462 Bad St. Leonhard (AT)
(74) Vertreter: Kopecky, Helmut

(56) Entgegenhaltungen:
- DE-A1- 2 150 939
- US-A- 3 118 835
- US-A- 3 733 263
- US-A- 3 764 012

## Beschreibung

Die Erfindung betrifft eine Kläranlage mit:
- einem Zulauf in ein Belebungsbecken,
- einem Überlauf vom Belebungsbecken in ein Nachklärbecken,
- sowie mit einem Überlauf vom Nachklärbecken in ein Klarwassersammelbecken mit einem Ablauf,
wobei ein Schlammsammelbehälter und das Belebungsbecken konzentrisch angeordnet sind, und der Schlammsammelbehälter zentral und das Belebungsbecken außenseitig angeordnet sind.

Zur Abwasserreinigung ist es bekannt, Kläranlagen der oben beschriebenen Art einzusetzen, deren einzelne Becken nebeneinanderliegend angeordnet sind, wobei die Becken mit Rohrleitungen untereinander verbunden sind. Kläranlagen dieser Art benötigen nicht nur große Flächen, sondern auch jeweils eigene Manipulationseinrichtungen für jedes Becken, sodass hohe Investitionskosten zu tätigen sind, und zwar nicht nur für die Grundbereitstellung, sondern auch hinsichtlich der Vorrichtungen zum Betrieb. Weiters ist für bekannte Kläranlagen die Gefahr des Einfrierens des Schlammes im Winterbetrieb gegeben. Will man eine herkömmliche Kläranlage in einer Einhausung unterbringen, erhöhen sich die Kosten für die Errichtung einer solchen Kläranlage noch enorm. Ein weiterer Nachteil bei bekannten Kläranlagen ist darin zu sehen, dass eine Vielzahl von Pumpen und sonstigen Aggregaten auch die Betriebskosten erhöht.

Zur Platzeinsparung ist es bekannt, Kläranlagen mit konzentrisch angeordneten Becken zu bauen, beispielsweise sind solche Kläranlagen in der US 4,197,202 und der IE 71631 B3 beschrieben. Gemäß der ersteren Kläranlage ist das Belebungsbecken zentral angeordnet und es befindet sich die Schlammsammlung mit Ableitungsleitungen unterhalb des Belebungsbeckens. Gemäß der IE 71631 ist das Belbungsbecken zentral vorgesehen und wird vom Nachklärbecken außenseitig umgeben.

Eine Kläranlage der eingangs beschriebenen Art ist aus der EP 1 114 797 A1 bekannt, bei der ein zentraler Schlammsammelbehälter von meheren konzentrisch angeordneten Belebungsbecken umgeben ist, wobei das Abwasser zunächst in ein mittleres Belebungsbecken eingeleitet, von diesem in Richtung Zentrum und von dort wiederum radial nach außen strömt. Bei dieser Anlage ist das Nachklärbecken als eigenes Becken neben den konzentrisch angeordneten Belebungsbecken vorgesehen. Hierdurch ergibt sich wiederum ein großer Flächenbedarf mit hohen Baukosten, sowie die Notwendigkeit, sowohl im Belebungsbecken als auch im Nachklärbecken jeweils eigene Manipulationseinrichtungen mit dementsprechend hohen Investitionskosten vorzusehen.

Die Erfindung bezweckt die Vermeidung dieser Nachteile und Schwierigkeiten und stellt sich die Aufgabe, eine Kläranlage der eingangs beschriebenen Art zu schaffen, bei der der Flächenbedarf möglichst gering ist, die leicht mit einer Einhausung versehen werden kann, die niedrige Betriebskosten und niedrige Investitionskosten erfordert und bei der zudem die Gefahr eines Einfrierens im Winterbetrieb nicht gegeben ist.

Diese Aufgabe wird bei einer Kläranlage der eingangs beschriebenen Art erfindungsgemäß dadurch geöst, dass zwischen dem Belebungsbecken und dem Schlammsammelbehälter das Nachklärbecken konzentrisch zum Schlammsammelbehälter angeordnet ist, wobei ein Überlauf vom Nachklärbecken in den Schlammsammelbehälter vorgesehen ist und das Klarwassersammelbecken ebenfalls konzentrisch zum Schlammsammelbehälter angeordnet ist.

Aus der DE-A 21 50 939 ist eine Kläranlage bekannt, bei der der Schlammsammelbehälter und das Belebungsbecken nicht konzentrisch angeordnet sind, sondern einander zu einem Ring ergänzen. Weiters ist ein Nachklärbecken nicht zwischen dem Belebungsbecken und dem Schlammsammelbehälter vorgesehen, sodass auch zwischen dem Schlammsammelbehälter und dem Nachklärbecken keine konzentrische Anordnung gegeben ist. Desgeleichen ist auch das Klarwassersammelbecken nicht konzentrisch zum Schlammsammelbehälter angeordnet.

Eine bevorzugte Variante, mit der die oben skizzierte Aufgabe noch effektiver gelöst werden kann, ist dadurch gekennzeichnet, dass das Klarwasserbecken das Nachklärbecken rinnenartig und vorzugsweise nur über eine bestimmte Höhe umgibt, wobei der Ablauf für das Klarwasser vom Klarwasserbecken unterhalb dessen Normalwasserspiegel ausgeht.

Vorzugsweise wird eine Manipulationseinheit besonders platzsparend und effektiv arbeitend angebracht, wenn diese oberhalb der konzentrischen Becken mittels eines Antriebes rotierend angeordnet ist, wobei die Rotationsachse mit der zentralen Mittelachse der konzentrischen Anordnung der Becken zusammenfällt, und welche Manipulationseinheit mit mindestens einer Schlammfördereinrichtung ausgestattet ist.

Vorzugsweise weist die Schlammfördereinrichtung einen zum Belebungsbecken führenden Rücklaufschlammförderer für den im Nachklärbecken anfallenden Bodenschlamm auf.

Weiters ist die Manipulationseinheit zweckmäßig mit mindestens einem zum Belebungsbecken führenden und im Nachklärbecken befindlichen Schwimmschlammaufnehmer zur Rückführung von Schwimmschlamm in das Belebungsbecken ausgestattet.

Eine weitere bevorzugte Ausführungsform ist dadurch gekennzeichnet, dass die Schlammfördereinrichtung einen zum Schlammsammelbehälter führenden Überschussschlammförderer für Bodenschlamm des Nachklärbeckens aufweist.

Zweckmäßig ist die Manipulationseinheit mit einem zum Schlammsammelbehälter führenden Schwimmschlammaufnehmer zur Überbringung von Überschussschlamm in das Schlammsammelbecken versehen.

Eine besonders kostengünstige und betriebssichere Variante ist dadurch gekennzeichnet, dass die Schlammfördereinrichtung entweder als ein mit Druckluft beaufschlagter Druckluftheber ausgebildet ist, oder eine Tauchmotorpumpe aufweist, wobei die Druckluft über ein zentrales Anspeiserohr mit Drehkupplung der Manipulationseinheit zugeführt wird, und zwar getrennt steuerbar für jede Förderfunktion oder wobei eine Tauchmotorpumpe über einen zentral aufgesetzten Schleifringkörper elektrisch versorgt und gesteuert wird, wobei zwecks einfacher Betriebsweise vorzugsweise zu jedem Rücklauf- und Überschussschlammförderer und zu jedem Schwimmschlammaufnehmer eine Druckluftleitung führt, die mittels vorzugsweise beheizter Magnetventile aktivier- oder deaktivierbar ist.

Weiters kann an der Manipulationseinheit eine an der Manipulationseinheit angeordnete und in den Schlammsammelbehälter ragende Krähleinrichtung vorgesehen sein.

Der Überlauf zwischen dem Belebungsbecken und dem Nachklärbecken ist vorzugsweise als Tauchschürze ausgebildet, welche Tauchschürze eine Eintrittsöffnung im Belebungsbecken an ihrem Endbereich überdeckt und eine Austrittsöffnung im Nachklärbecken an ihrem unteren Endbereich aufweist und vorzugsweise aus Edelstahlblech gefertigt ist.

Eine besonders platzsparende Variante ist dadurch gekennzeichnet, dass eine zwischen dem Belebungsbecken und dem Nachklärbecken angeordnete kegelförmige und von unten nach oben divergierende Trennwand vorgesehen ist, wobei diese Trennwand zweckmäßig aus Edelstahlblech gebildet ist und vorzugsweise am oberen Endbereich integral mit einem rinnenartig ausgebildeten Klarwasserbecken ausgebildet ist, wobei eine zwischen dem Nachklärbecken und dem Klarwasserbecken angeordnete Trennwand zweckmäßig ebenfalls von Edelstahlblech gebildet ist und unterhalb des Normalwasserspiegels mit Bohrungen zum Übertritt von Klarwasser in das Klarwasserbecken versehen ist.

Gemäß einer weiteren bevorzugten Variante ist eine Druckbelüftungseinrichtung im Belebungsbecken vorgesehen, die vorzugsweise gleichzeitig mit der Luftzufuhr für die Schlammfördereinrichtung aktivierbar ist.

Zur Überwachung der Förderfunktion der Schlammfördereinrichtung sind zweckmäßig Überwachungselektroden vorgesehen.

Der Schwimmschlammaufnehmer weist in einfacher Konstruktionsart eine Schwimmschlammtasche auf, an der eine höhenmäßig bewegbare Wasserabzugsleiste vorgesehen ist, wobei die Wasserabzugsleiste mittels Schwimmkörper an das Niveau des Wasserstandes des Nachklärbeckens anpassbar ist.

Zweckmäßig ist im Schlammsammelbecken eine Trübwasserabzugseinrichtung vorgesehen.

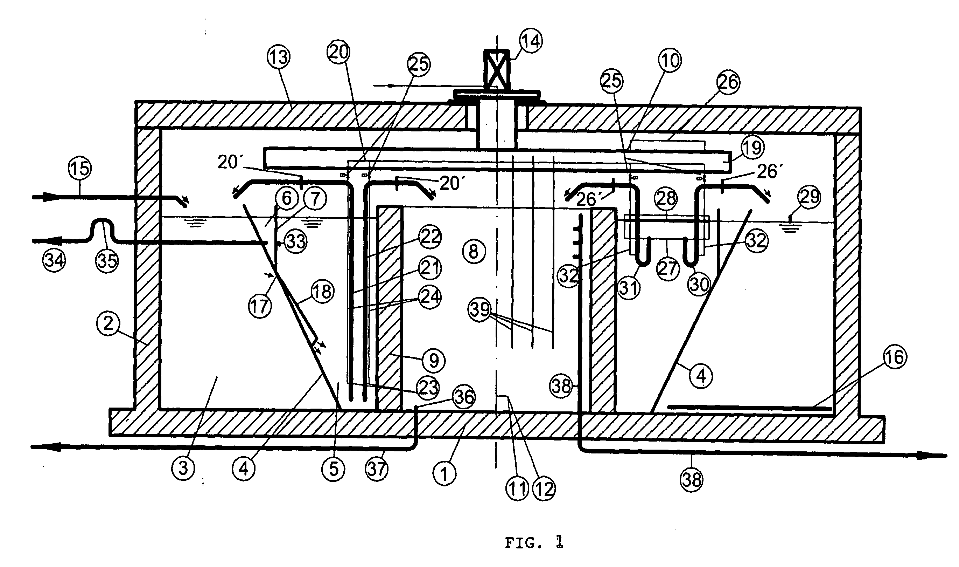

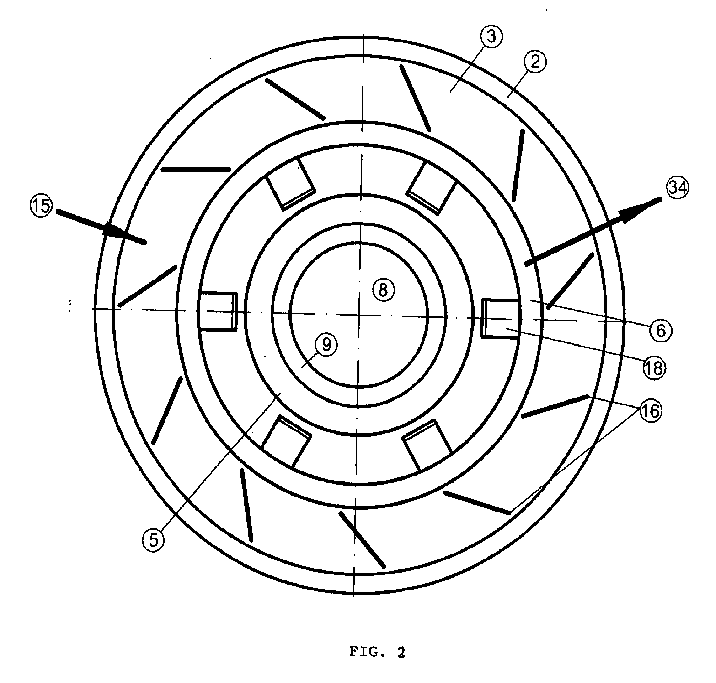

Die Erfindung ist nachfolgend anhand eines in der Zeichnung in schematischer Darstellung veranschaulichten Ausführungsbeispieles näher erläutert, wobei die Fig. 1 einen vertikal geführten Axialschnitt durch eine erfindungsgemäße Kläranlage und Fig. 2 eine Draufsicht jedoch mit abgebauter Manipulationseinheit zeigen.

Gemäß der in den Figuren dargestellten Ausführungsform ist die Kläranlage von konzentrisch angeordneten Becken gebildet, wobei auf einer Basisplatte 1 eine ringförmige Außenwand 2 vorgesehen ist, die die Kläranlage nach außen begrenzt. Es sei hier darauf hingewiesen, dass der Grundriss der Becken nicht kreisringförmig sein muss; die Becken können auch von Vieleckwänden begrenzt sein.

Diese ringförmige Außenwand 2 begrenzt ein Belebungsbecken 3 außen, welches Belebungsbecken 3 innenseitig von einer vorzugsweise kegelförmig nach oben divergierenden Trennwand 4 von einem Nachklärbecken 5 abgegrenzt ist. Diese Trennwand 4 ist vorzugsweise aus nichtrostendem Stahl (Edelstahl) gebildet und am oberen Ende mit einem Klarwasserbecken 6 versehen, das sich ringförmig, also um die gesamte Trennwand 4, erstreckt und einerseits von der kegelförmigen Trennwand 4 und andererseits von einer etwa zylinderfömig, in einer bestimmten Höhe an der Trennwand 4 ansetzenden Wand 7 von dem Nachklärbecken 5 abgegrenzt ist. Diese zylinderförmig gestaltete Wand 7 ist ebenfalls von nichtrostendem Stahl gebildet. Selbstverständlich kann das Klarwasserbecken auch eine andere als in Fig. 1 dargestellte Querschnittsform aufweisen - wesentlich ist die ringförmige Ausbildung.

Zentral vorgesehen ist ein Schlammsammelbehälter 8, der gegenüber dem Nachklärbecken 5 mittels einer Ringwand 9 abgegrenzt ist.

Die kegelförmige Trennwand 4 ergibt eine sehr stabile selbsttragende Konstruktion.

Oberhalb der Becken 3, 5 und 6 ist eine Manipulationseinheit vorgesehen, die um eine Rotationsachse 11, die mit der zentralen Mittelachse 12 der Becken 3, 5 und 6 zusammenfällt, entweder an einer die Becken 3, 5 und 6 überspannenden Brücke 13 oder an einer die Becken 3, 5 und 6 zur Gänze abdeckenden Decke drehbar gelagert ist. Zum Drehen der Manipulationseinheit 10 dient ein ebenfalls zentral angeordneter Antrieb 14.

Anhand der nachfolgenden Beschreibung der Funktion sind die für die Funktion der Kläranlage noch notwendigen Überläufe erläutert.

Wie aus Fig. 1 ersichtlich ist, strömt das Abwasser über einen oberhalb des Normalabwasserspiegels in das Belebungsbecken 3 mündenden Zulauf 15 in dieses. Das Belebungsbecken 3 ist mit einer sich in Bodennähe über dessen Bodenfläche erstreckenden Druckbelüftungseinrichtung 16 ausgestattet.

Vom Belebungsbecken 3 strömt das Abwasser über Ablauföffnungen 17, die in der kegelförmigen Trennwand 4 vorgesehen sind, zum Nachklärbecken 5, und zwar unterhalb des an der kegelförmigen Trennwand 4 angebauten Klarwasserbeckens 6. Die Ablauföffnungen 17 sind von einer sich von diesen Öffnungen 17 nach unten erstreckenden Tauchschürze 18 bedeckt, sodass das Abwasser bzw. der Belebtschlamm, der durch diese Öffnungen 17 in das Nachklärbecken 5 übertritt, innerhalb dieser Tauchschürzen 18 - diese sind, wie aus Fig. 2 ersichtlich, mehrfach über den Umfang verteilt vorgesehen - einen Entgasungsbereich vorfindet, welche Gase nach oben durch die Ablauföffnungen 17 wiederum in das Belebungsbecken 3 zurückströmen.
Vom Nachklärbecken 5 wird das Trübwasser bzw. der Belebtschlamm mittels einer an der Manipulationseinheit 10, d.h. deren sich quer über die Becken erstreckenden Träger 19, montierten Schlammfördereinrichtung 20 vom Bodenbereich gehoben und einerseits über einen Rücklaufschlammförderer 21 der Schlammfördereinrichtung 20 in das Belebungsbecken 3 und andererseits mittels eines Überschussschlammförderers 22 in den zentral angeordneten Schlammsammelbehälter 8 übergeleitet. Zu diesem Zweck sind an dem Rücklaufschlammförderer 21 und an dem Überschussschlammförderer 22, die als Rohre ausgebildet sind, nahe dem unteren Endbereich derselben Lufteintrittsöffnungen 23 vorgesehen, über die Druckluft, die zentral der Manipulationseinheit 10 über eine Drehkupplung zugeführt wird und von dort über Druckluftleitungen 24 zu den Lufteindrucksöffnungen geführt wird, zugeleitet wird. Die einzelnen Druckluftleitungen 24 sind mit vorzugsweise beheizbaren Magnetventilen 25 zur Regelung der Druckluftmenge und damit der Fördermenge versehen.

Der Träger 19 der Manipulationseinheit 10 ist an seinem der Schlammfördereinrichtung 20 gegenüberliegenden Ende mit einem Schwimmschlammaufnehmer 26 versehen, der eine Schwimmschlammtasche 27 aufweist, an der eine im Niveau bewegbare Wasserabzugsleiste 28 vorgesehen ist, deren Niveau das Eindringen von Schwimmschlamm in die Schwimmschlammtasche 27 bestimmt. Diese Wasserabzugsleiste 28 ist mittels nicht näher dargestellter Schwimmkörper an das Niveau 29 des Flüssigkeitsstandes des Nachklärbeckens 5 anpassbar. Hierdurch ist sichergestellt, dass in erster Linie Schwimmschlamm und nicht allzuviel bereits geklärtes Wasser in die Schwimmschlammtasche 27 gelangt.

Von der Schwimmschlammtasche 27 führt einerseits eine Rohrleitung 30 zur Rückführung des Schwimmschlammes über das Klarwasserbecken 6 hinweg bis zum Belebungsbecken 3 und andererseits eine weitere Rohrleitung 31 zur Überbringung von Überschussschlamm in den Schlammsammelbehälter. Auch für diese Rohrleitungen 30, 31 sind Druckluftzuführungen 32 vorgesehen, wobei die Fördermenge ebenfalls mit Magnetventilen 25 regelbar ist, sodass auch die Menge des rückgeführten bzw. des weitergeleiteten Schwimmschlammes genau dosierbar ist.

Das geklärte Wasser gelangt nunmehr über Klarwasserabzugsbohrungen 33, die in der zylindrischen Trennwand, die das Nachklärbecken vom Klarwasserbecken trennt, und mehrfach über den Umfang verteilt angeordnet sind, in das rinnenförmige Klarwasserbecken 6. Eine Mehrzahl der Klarwasserabzugsbohrungen 33 verhindert ein Abdriften von Schwemmstoffen. Das Klarwasser gelangt weiters über einen Ablauf 34, der vom Klarwasserbecken 6 durch das Belebungsbecken 3 geführt ist, aus der Kläranlage hinaus, wobei dieser Ablauf 34 mit einem sich sifonartig nach oben erstreckenden Abschnitt 35 zur Regelung des Abwassers bzw. Klarwasserniveaus 29 ausgestattet ist.

Im Boden des Schlammsammelbehälters 8 ist eine Ablauföffnung 36 vorgesehen, von der eine Schlammabzugleitung 37 von der Kläranlage wegführt, beispielsweise zu einer Schlammentwässerungsmaschine führt. Im Schlammsammelbehälter 8 ist weiters ein Trübwasserabzug 38 vorgesehen. Weiters ragen in den Schlammsammelbehälter 8 an der Manipulationseinheit 10 vorgesehene Krählstäbe 39, die ein Homogenisieren des Schlammes und eine bessere statische Eindickung desselben bewirken.

Ein besonderer Vorteil der erfindungsgemäßen Kläranlage ist darin zu sehen, dass mit einer Manipulationseinheit 10 sämtliche Becken 3, 5 und 6 sowie der Schlammsammelbehälter 8 in allen Bereichen, d.h. durch Drehen der Manipulationseinheit 10 um 360°, erreichbar und bearbeitbar sind. So wird beispielsweise die gesamte Grundfläche des Nachklärbeckens 5 mittels der Schlammfördereinrichtung erreicht, und es wird auch der Rücklaufschlamm über den gesamten Umfang des Belebungsbeckens 3 in dieses eingebracht. Dadurch wird eine Pfropfenströmung in der Belebung verhindert und eine vertikale Durchströmung des Nachklärbeckens 5 sichergestellt. Dies gilt auch für den Schwimmschlammaufnehmer 26.

Die Durchführung des Schlammtransportes mittels Druckluft sichert ein weitgehend verschleißfreies und wartungsfreies Arbeiten sowohl der Schlammfördereinrichtung 20 als auch des Schwimmschlammaufnehmers 26. Vorteilhaft ist der Räumbetrieb, also die Inbetriebnahme der Schlammfördereinrichtung 20 und des Schwimmschlammaufnehmers 26, mit dem Belüftungsbetrieb gekoppelt.

Die erfindungsgemäße Kläranlage ist speziell für kommunale und industrielle Kläranlagen geeignet. Das Belebtschlammanlagensystem zeichnet sich besonders durch eine kompakte Bauweise und funktionelle Gestaltung der biologischen Reinigungsstufe aus. Die erfindungsgemäße Kläranlage kann sowohl für eine einstufige Anlage mit simultaner Schlammstabilisierung als auch in zweistufigen Anlagen mit anaerober Schlammbehandlung angewendet werden.

Die Niveaus 29 der Wasserspiegel im Belebungsbecken 3, dem Nachklärbecken 5 und dem Klarwasserbecken 6 sind aufgrund der hydraulischen Verbindung der Becken 3, 5 und 6 immer ausgeglichen. Dadurch ist bei höheren Zulaufmengen eine Vergleichmäßigung des Ablaufes durch eine Pufferwirkung gegeben, welche sich gemäß der Ablaufkennlinie einstellt. Die Steuerung der Manipulationseinheit 10 erfolgt über eine eigene Steuereinheit oder ein Anlagenprozessleitsystem.

Zu fördernde Schlammmengen können insofern geregelt werden, und zwar einerseits über die Einschaltzeiten der Anlage und andererseits über die mittels der Magnetventile einstellbare Druckluftmenge der Schlammfördereinrichtung. Der abzuziehende Überschussschlamm wird ebenso über die Einschaltdauer der Anlage geregelt. Dabei kann die abzuziehende Schlammmenge über den ganzen Tag verteilt in kleinen Mengen in den Schlammsammelbehälter 8 überführt werden. Um den Trübwasserabzug aus dem Schlammsammelbehälter 8 effizient zu ermöglichen, wird einige Stunden vor dem Abzug des Trübwassers kein Überschussschlamm mehr in den Schlammsammelbehälter 8 eingebracht.

## Patentansprüche

1. Kläranlage mit:
- einem Zulauf (15) in ein Belebungsbecken (3),
- einem Überlauf (17, 18) vom Belebungsbecken (3) in ein Nachklärbecken (5),
- sowie mit einem Überlauf (33) vom Nachklärbecken (5) in ein Klarwassersammelbecken (6) mit einem Ablauf (34),
wobei ein Schlammsammelbehälter (8) und das Belebungsbecken (3) konzentrisch angeordnet sind, und der Schlammsammelbehälter (8) zentral und das Belebungsbecken (3) außenseiti-g angeordnet sind, **dadurch gekennzeichnet, dass** zwischen dem Belebungsbecken (3) und dem Schlammsammelbehälter (8) das Nachklärbecken (5) konzentrisch zum Schlammsammelbehälter (8) angeordnet ist, wobei ein Überlauf (22) vom Nachklärbecken (5) in den Schlammsammelbehälter (8) vorgesehen ist und das Klarwassersammelbecken (6) ebenfalls konzentrisch zum Schlammsammelbehälter (8) angeordnet ist.

2. Kläranlage nach Anspruch 1, **dadurch gekennzeichnet, dass** das Klarwasserbecken (6) das Nachklärbecken (5) rinnenartig und vorzugsweise nur über eine bestimmte Höhe umgibt, wobei der Ablauf (34) für das Klarwasser vom Klarwasserbecken (6) unterhalb dessen Normalwasserspiegel (29) ausgeht.

3. Kläranlage nach Anspruch 1 oder 2, **gekennzeichnet durch** eine oberhalb der konzentrischen Becken (3,5,6) mittels eines Antriebes (14) rotierend angeordnete Manipulationseinheit (10), wobei die Rotationsachse (11) mit der zentralen Mittelachse (11) der konzentrischen Anordnung der Becken (3, 5, 6) zusammenfällt, und welche Manipulationseinheit (10) mit mindestens einer Schlammfördereinrichtung (20) ausgestattet ist.

4. Kläranlage nach Anspruch 3, **dadurch gekennzeichnet, dass** die Schlammfördereinrichtung (20) einen zum Belebungsbecken (3) führenden Rücklaufschlammförderer (21) für den im Nachklärbecken (5) anfallenden Bodenschlamm aufweist.

5. Kläranlage nach Anspruch 3 oder 4, **dadurch gekennzeichnet, dass** die Manipulationseinheit (10) mindestens einen zum Belebungsbecken (3) führenden und im Nachklärbecken (5) befindlichen Schwimmschlammaufnehmer (26) zur Rückführung von Schwimmschlamm in das Belebungsbecken (3) aufweist.

6. Kläranlage nach einem oder mehreren der Ansprüche 3 bis 5, **dadurch gekennzeichnet, dass** die Schlammfördereinrichtung (20) einen zum Schlammsammelbehälter (8) führenden Überschussschlammförderer (22) für Bodenschlamm des Nachklärbeckens (5) aufweist.

7. Kläranlage nach einem oder mehreren der Ansprüche 3 bis 6, **dadurch gekennzeichnet, dass** die Manipulationseinheit (10) einen zum Schlammsammelbehälter (8) führenden Schwimmschlammaufnehmer (26) zur Überbringung von Überschussschlamm in das Schlammsammelbecken (8) aufweist.

8. Kläranlage nach einem oder mehreren der Ansprüche 3 bis 7, **dadurch gekennzeichnet, dass** die Schlammfördereinrichtung (20) entweder als ein mit Druckluft beaufschlagter Druckluftheber ausgebildet ist oder eine Tauchmotorpumpe aufweist, wobei die Druckluft über ein zentrales Anspeiserohr mit Drehkupplung der Manipulationseinheit (10) zugeführt wird, und zwar getrennt steuerbar für jede Förderfunktion oder wobei eine Tauchmotorpumpe über einen zentral aufgesetzten Schleifringkörper elektrisch versorgt und gesteuert wird.

9. Kläranlage nach Anspruch 8, **dadurch gekennzeichnet, dass** zu jedem Rücklauf- und Überschussschlammförderer (21, 22) und zu jedem Schwimmschlammaufnehmer (30, 31) eine Druckluftleitung (24, 32) führt, die mittels vorzugsweise beheizter Magnetventile (25) aktivier- oder deaktivierbar ist.

10. Kläranlage nach einem oder mehreren der Ansprüche 3 bis 9, **gekennzeichnet durch** eine an der Manipulationseinheit (10) angeordnete und in den Schlammsammelbehälter (8) ragende Krähleinrichtung (39).

11. Kläranlage nach einem oder mehreren der Ansprüche 1 bis 10, **gekennzeichnet durch** eine einen Überlauf bildende Tauchschürze (18), angeordnet an der zwischen dem Belebungsbecken (3) und dem Nachklärbecken (5) angeordneten Trennwand (4), welche Tauchschürze (18) eine Eintrittsöffnung (17) im Belebungsbecken (3) an ihrem oberen Endbereich überdeckt und eine Austrittsöffnung im Nachklärbecken (5) an ihrem unteren Endbereich aufweist und vorzugsweise aus Edelstahlblech gefertigt ist.

12. Kläranlage nach einem oder mehreren der Ansprüche 1 bis 11, **gekennzeichnet durch** eine zwischen dem Belebungsbecken (3) und dem Nachklärbecken (5) angeordnete kegelförmige und von unten nach oben divergierende Trennwand (4).

13. Kläranlage nach einem oder mehreren der Ansprüche 1 bis 12, **dadurch gekennzeichnet, dass** eine zwischen dem Belebungsbecken (3) und dem Nachklärbecken (5) angeordnete Trennwand (4) von Edelstahlblech gebildet ist und vorzugsweise am oberen Endbereich integral mit einem rinnenartig ausgebildeten Klarwasserbecken (6) ausgebildet ist, wobei eine zwischen dem Nachklärbecken (5) und dem Klarwasserbecken (6) angeordnete Trennwand (7) ebenfalls von Edelstahlblech gebildet ist und unterhalb des Normalwasserspiegels (29) mit Bohrungen (33) zum Übertritt von Klarwasser in das Klarwasserbecken (6) versehen ist.

14. Kläranlage nach einem oder mehreren der Ansprüche 3 bis 13, **gekennzeichnet durch** eine Druckbelüftungseinrichtung (16) im Belebungsbecken (3), vorzugsweise gleichzeitig aktivierbar mit der Luftzufuhr für die Schlammfördereinrichtung (20).

15. Kläranlage nach einem oder mehreren der Ansprüche 3 bis 14, **gekennzeichnet durch** Überwachungselektroden (20', 26') zur Überwachung der Förderfunktion der Schlammfördereinrichtung (20) und des Schwimmschlammaufnehmers (26).

16. Kläranlage nach einem oder mehreren der Ansprüche 3 bis 15, **dadurch gekennzeichnet, dass** der Schwimmschlammaufnehmer (26) eine Schwimmschlammtasche (27) aufweist, an der eine höhenmäßig bewegbare Wasserabzugsleiste (28) vorgesehen ist.

17. Kläranlage nach Anspruch 16, **dadurch gekennzeichnet, dass** die Wasserabzugsleiste (28) mittels Schwimmkörper an das Niveau (29) des Wasserstandes des Nachklärbeckens (5) anpassbar ist.

18. Kläranlage nach einem oder mehreren der Ansprüche 1 bis 17, **gekennzeichnet durch** eine Trübwasserabzugseinrichtung (38) im Schlammsammelbehälter (8).

## Claims

1. A water treatment plant comprising:
- an inlet (15) into an activated-sludge tank (3),
- an overflow (17, 18) from the activated-sludge tank (3) into a secondary sedimentation tank (5),
- as well as an overflow (33) from the secondary sedimentation tank (5) into a clarified water reservoir (6) having an outlet (34),
wherein a sludge receiving tank (8) and the activated-sludge tank (3) are arranged concentrically and the sludge receiving tank (8) is arranged centrally and the activated-sludge tank (3) is arranged at the exterior, **characterized in that**, between the activated-sludge tank (3) and the sludge receiving tank (8), the secondary sedimentation tank (5) is disposed concentrically relative to the sludge receiving tank (8), with an overflow (22) from the secondary sedimentation tank (5) into the sludge receiving tank (8) being provided and the clarified water reservoir (6) also being disposed concentrically relative to the sludge receiving tank (8).

2. A water treatment plant according to claim 1, **characterized in that** the clarified water tank (6) surrounds the secondary sedimentation tank (5) in a channel-like fashion and preferably only above a particular height, with the outlet (34) for the clarified water starting at the clarified water tank (6) below the normal water level (29) thereof.

3. A water treatment plant according to claim 1 or 2, **characterized by** a manipulation unit (10) rotationally arranged above the concentric tanks (3, 5, 6) by means of a drive (14), with the axis of rotation (11) coinciding with the central medial axis (11) of the concentric arrangement of the tanks (3, 5, 6), and which manipulation unit (10) is equipped with at least one sludge conveying device (20).

4. A water treatment plant according to claim 3, **characterized in that** the sludge conveying device (20) comprises a return sludge conveyor (21) leading to the activated-sludge tank (3) for the bottom sludge accumulating in the secondary sedimentation tank (5).

5. A water treatment plant according to claim 3 or 4, **characterized in that** the manipulation unit (10) comprises at least one skimmings receiver (26) leading to the activated-sludge tank (3) and located in the secondary sedimentation tank (5) for returning skimmings into the activated-sludge tank (3).

6. A water treatment plant according to one or several of claims 3 to 5, **characterized in that** the sludge conveying device (20) comprises a surplus sludge conveyor (22) for bottom sludge of the secondary sedimentation tank (5), which surplus sludge conveyor leads to the sludge receiving tank (8).

7. A water treatment plant according to one or several of claims 3 to 6, **characterized in that** the manipulation unit (10) comprises a skimmings receiver (26) leading to the sludge receiving tank (8) for conveying surplus sludge into the sludge reservoir (8).

8. A water treatment plant according to one or several of claims 3 to 7, **characterized in that** the sludge conveying device (20) either is designed as an air-lift pump charged with compressed air or comprises a submersible motor-driven pump, wherein the compressed air is supplied to the manipulation unit (10) via a central feed pipe with a rotating joint, in fact controllable separately for each conveying function, or wherein a submersible motor-driven pump is electrically supplied and controlled via a centrally placed slip ring body.

9. A water treatment plant according to claim 8, **characterized in that** a compressed-air pipe (24, 32) leads to each return and surplus sludge conveyor (21, 22) and to each skimmings receiver (30, 31), which compressed-air pipe can be activated or deactivated by means of solenoid valves (25) which preferably are heated.

10. A water treatment plant according to one or several of claims 3 to 9, **characterized by** a rabbling device (39) arranged on the manipulation unit (10) and projecting into the sludge receiving tank (8).

11. A water treatment plant according to one or several of claims 1 to 10, **characterized by** an immersion skirt (18) forming an overflow and arranged at the partition wall (4) arranged between the activated-sludge tank (3) and the secondary sedimentation tank (5), which immersion skirt (18) in its upper end region covers an entrance opening (17) in the activated-sludge tank (3) and in its lower end region exhibits a discharge opening in the secondary sedimentation tank (5) and preferably is manufactured from stainless steel sheets.

12. A water treatment plant according to one or several of claims 1 to 11, **characterized by** a conical partition wall (4) diverging from the bottom to the top and arranged between the activated-sludge tank (3) and the secondary sedimentation tank (5).

13. A water treatment plant according to one or several of claims 1 to 12, **characterized in that** a partition wall (4) arranged between the activated-sludge tank (3) and the secondary sedimentation tank (5) is formed from stainless steel sheets and, preferably in the upper end region, is formed integrally with a clarified water tank (6) of a channel-like design, whereas a partition wall (7) arranged between the secondary sedimentation tank (5) and the clarified water tank (6) is also formed from stainless steel sheets and is provided with bores (33) below the normal water level (29) for the transfer of clarified water into the clarified water tank (6).

14. A water treatment plant according to one or several of claims 3 to 13, **characterized by** a pressure ventilation device (16) in the activated-sludge tank (3), which preferably can be activated simultaneously with the air supply for the sludge conveying device (20).

15. A water treatment plant according to one or several of claims 3 to 14, **characterized by** monitoring electrodes (20', 26') for monitoring the conveying function of the sludge conveying device (20) and the skimmings receiver (26).

16. A water treatment plant according to one or several of claims 3 to 15, **characterized in that** the skimmings receiver (26) comprises a skimmings bag (27) on which a water drainage strip (28) movable as to height is provided.

17. A water treatment plant according to claim 16, **characterized in that** the water drainage strip (28) is adjustable to the altitude (29) of the water level of the secondary sedimentation tank (5) by means of floating bodies.

18. A water treatment plant according to one or several of claims 1 to 17, **characterized by** a turbid water draining device (38) in the sludge receiving tank (8).

## Revendications

1. Station d'épuration, comportant
- une alimentation (15) d'un bassin à boues activées (3),
- un débordement (17, 18) depuis le bassin à boues activées (3) vers un bassin de décantation secondaire (5),
- ainsi qu'un débordement (33) depuis le bassin de décantation secondaire (5) vers un bassin de collecte d'eaux épurées (6) muni d'une évacuation (34),
un récipient de collecte de boues (8) et le bassin à boues activées (3) étant agencés concentriquement, et le récipient de collecte de boues (8) étant agencé au centre et le bassin à boues activées (3) étant agencé du côté extérieur,
**caractérisée en ce que** le bassin de décantation secondaire (5) est agencé concentriquement au récipient de collecte de boues (8) entre le bassin à boues activées (3) et le récipient de collecte de boues (8), un débordement (22) étant prévu depuis le bassin de décantation secondaire (5) vers le récipient de collecte de boues (8) et le bassin de collecte d'eau d'eaux épurées (6) étant agencé également concentriquement au récipient de collecte de boues (8).

2. Station d'épuration selon la revendication 1, **caractérisée en ce que** le bassin d'eaux épurées (6) entoure le bassin de décantation secondaire (5) à la manière d'une goulotte et de préférence uniquement sur une hauteur déterminée, dans laquelle l'évacuation (34) pour les eaux épurées part du bassin d'eaux épurées (6) au-dessous de son niveau d'eau normal (29).

3. Station d'épuration selon la revendication 1 ou 2, **caractérisée par** une unité de manipulation (10) agencée au-dessus des bassins concentriques (3, 5, 6) avec faculté de rotation au moyen d'un entraînement (14), l'axe de rotation (11) coïncidant avec l'axe médian central (11) de l'agencement concentrique des bassins (3, 5, 6), ladite unité de manipulation (10) étant équipée d'au moins un dispositif de convoyage de boues (20).

4. Station d'épuration selon la revendication 3, **caractérisée en ce que** le dispositif de convoyage de boues (20) comprend un convoyeur de boues de retour (21) qui mène vers le bassin à boues activées (3) et qui est destiné aux boues de fond qui s'accumulent dans le bassin de décantation secondaire (5).

5. Station d'épuration selon la revendication 3 ou 4, **caractérisée en ce que** l'unité de manipulation (10) comprend au moins un récepteur de boues flottantes (26) qui mène vers le bassin à boues activées (3) et qui se trouve dans le bassin de décantation secondaire (5) pour le retour de boues flottantes dans le bassin à boues activées (3).

6. Station d'épuration selon l'une ou plusieurs des revendications 3 à 5, **caractérisée en ce que** le dispositif de convoyage de boues (20) comprend un convoyeur de boues excédentaires (22) qui mène vers le récipient de collecte de boues (8) et qui est destiné aux boues de fond du bassin de décantation secondaire (5).

7. Station d'épuration selon l'une ou plusieurs des revendications 3 à 6, **caractérisée en ce que** l'unité de manipulation (10) comprend un récepteur de boues flottantes (26) qui mène vers le récipient de collecte de boues (8) et qui est destiné à transférer des boues excédentaires dans le bassin de collecte de boues (8).

8. Station d'épuration selon l'une ou plusieurs des revendications 3 à 7, **caractérisée en ce que** le dispositif de convoyage de boues (20) est réalisé sous la forme d'un dispositif de levage pneumatique alimenté en air comprimé, ou comprend une pompe à moteur submersible, l'air comprimé étant amené à l'unité de manipulation (10) via un tube d'alimentation central à raccord rotatif, et ceci à commande séparée pour chaque fonction de convoyage, ou bien une pompe à moteur submersible est alimentée électriquement via un corps à bague collectrice rapporté au centre.

9. Station d'épuration selon la revendication 8, **caractérisée en ce qu'**une conduite à air comprimé (24, 32) mène vers chaque convoyeur de boues de retour et vers chaque convoyeur de boues excédentaires (21, 22) et vers chaque récepteur de boues flottantes (30, 31), qui est susceptible d'être activée ou désactivée au moyen de valves magnétiques (25) de préférence chauffées.

10. Station d'épuration selon l'une ou plusieurs des revendications 3 à 9, **caractérisée par** un dispositif de raclage (39) agencé sur l'unité de manipulation (10) et pénétrant dans le récipient de collecte de boues (8).

11. Station d'épuration selon l'une ou plusieurs des revendications 1 à 10, **caractérisée par** une jupe submersible (18) formant un trop-plein, agencée sur la cloison de séparation (4) disposée entre le bassin à boues activées (3) et le bassin de décantation secondaire (5), ladite jupe submersible (18) recouvrant une ouverture d'entrée (17) dans le bassin à boues activées (3) au niveau de sa zone d'extrémité supérieure et présentant une ouverture de sortie dans le bassin de décantation secondaire (5) au niveau de sa zone d'extrémité inférieure, et étant fabriquée de préférence en tôle d'acier spécial.

12. Station d'épuration selon l'une ou plusieurs des revendications 1 à 11, **caractérisée par** une cloison de séparation (4) agencée entre le bassin à boues activées (3) et le bassin de décantation secondaire (5), en forme de cône et divergeant depuis le bas vers le haut.

13. Station d'épuration selon l'une ou plusieurs des revendications 1 à 12, **caractérisée en ce qu'**une cloison de séparation (4) agencée entre le bassin à boues activées (3) et le bassin de décantation secondaire (5) est formée en tôle d'acier spécial et est réalisée, au niveau de la zone d'extrémité supérieure, de préférence de façon intégrale avec un bassin à eau décantée (6) réalisée à la manière d'une goulotte, une cloison de séparation (7) agencée entre le bassin de décantation secondaire (5) et le bassin à eaux épurées (6) étant également formée en tôle d'acier spécial et étant pourvue, au-dessous du niveau d'eau normal (29), de perçages (33) destinés au passage d'eaux épurées vers le bassin à eaux épurées (6).

14. Station d'épuration selon l'une ou plusieurs des revendications 3 à 13, **caractérisée par** un dispositif de ventilation sous pression (16) dans le bassin à boues activées (3), de préférence simultanément activable avec l'alimentation en air pour le dispositif de convoyage de boues (20).

15. Station d'épuration selon l'une ou plusieurs des revendications 3 à 14, **caractérisée par** des électrodes de surveillance (20', 26') pour surveiller la fonction de convoyage du dispositif de convoyage de boues (20) et du récepteur de boues flottantes (26).

16. Station d'épuration selon l'une ou plusieurs des revendications 3 à 15, **caractérisée en ce que** le récepteur de boues flottantes (26) présente une poche à boues flottantes (27) sur laquelle est prévue une baguette d'extraction d'eau (28) mobile en hauteur.

17. Station d'épuration selon la revendication 16, **caractérisée en ce que** la baguette d'extraction d'eau (28) est adaptable à la hauteur (29) du niveau d'eau du bassin de décantation secondaire (5) au moyen de corps flottants.

18. Station d'épuration selon l'une ou plusieurs des revendications 1 à 17, **caractérisée par** un dispositif d'extraction d'eau trouble (38) dans le récipient de collecte de boues (8).
